# EUROPEAN PATENT SPECIFICATION

(11) **EP 2 162 373 B1**
(45) Date of publication and mention of the grant of the patent: **02.09.2015**
(21) Application number: 08747925.9
(22) Date of filing: 12.05.2008
(51) Int. Cl.: B65D 88/66, G05D 19/02

(54) **Device to effect optimal delivery of dry bulk material from a hopper**
Gerät, um eine optimale Entleerung von trockenem Schüttgut aus einem Trichter zu bewirken
Dispositif pour effectuer une discharge optimale de matière en vrac sec à partir d'une trémie

(30) Priority: 10.05.2007 AU 2007902487 P
(43) Date of publication of application: 17.03.2010
(73) Proprietor: Vibration Technology Solutions Pty Limited, Swan Hill, VIC 3585 (AU)
(72) Inventor: McDIARMID, James, Frances, Swan Hill, VIC 3053 (AU); THORPE, Graham, Reginald, Brigthon East, VIC 3187 (AU); ROUILLARD, Vincent, Yarraville, VIC 3013 (AU)
(74) Representative: Evans, Huw David Duncan
(86) International application number: PCT/AU2008/000653
(87) International publication number: WO 2008/138045

(56) References cited:
- AU-A1- 2004 201 408
- GB-A- 1 113 651
- GB-A- 1 251 605
- GB-A- 2 008 809
- GB-A- 2 284 282
- JP-A- 3 275 488
- JP-A- 2008 127 047
- US-A- 3 467 363
- US-A- 4 513 882
- US-A1- 2007 007 109
- DATABASE WPI Week 199326, Derwent Publications Ltd., London, GB; Class Q35, AN 1993-206339, XP008115049 & DE 41 42 398 A1 (REO BORIS VON WOLFF GMBH) 24 June 1993

## Description

This invention relates to the discharge of material from hoppers, silos or the like which will be referred to herein generally as hoppers.

Grain growers must empty their hoppers - not only because any grain left inside them is inherently valuable, but also because any leftover grain can harbour insect and other pests that can re-infest grains that are harvested and stored the following season. If these insects are detected the grain is rejected by grain dealers and the farmer must disinfest his grain

Many grain hoppers presently in use on farms have hopper bottoms that are very shallow and this makes it difficult to remove the last few hundred kilograms of grain. As a result farmers often resort to heavily striking the hoppers to induce flow. This can physically damage the hopper.

On occasions they can be tempted to enter hoppers to physically move the grain. The results can be disastrous; persons entering the hopper can be at risk of injury, particularly if the auger delivering the material from the hopper is operating.

Further, when dry bulk material such as grain, compounds, chemicals, pharmaceuticals, fertilisers and the like is to be discharged from full or partly filled hoppers, it is found that even where the hopper has been shaped to best facilitate such discharge, the material can cease to flow, as often a void occurs in the material above the outlet because, effectively, an arch of the material Is formed. In some applications, it is found that material in the centre of the hopper is delivered and the remainder of the material, which is adjacent the walls of the hopper tends not to slide down the conical lower portion of the hopper and this holds up the material there above.

One solution to the problem is for farmers to use a conventional silo shaker, but there are several impediments to taking this course of action. They are:
- Such devices usually operate at a single frequency, namely mains power frequency (50 or 60 Hz) and this can be far from optimal for most structures. These shakers are therefore likely to be ineffective because the energy they supply is restricted by the structure and it is not used to disturb the solid particles in the hopper or hoppers.
- Conventional hopper shakers are not portable and they are driven by mains electricity.

There have been proposed systems, including the system of Australian Patent Application No 2004201408 of James Francis McDiarmid, one of the inventors, of providing a vibrator unit in contact with the wall of the hopper, generally close to the outlet thereof, whereby the hopper can be subjected to a vibration, usually in a sonic frequency.

Such arrangements have been found to vary substantially in efficiency depending on the material in the hopper, the quantity of maternal in the hopper and on the frequency selected.

Other arrangements are disclosed in GB 2008809 and US 3,467,363.

The object of the invention is to provide a variation of the above systems wherein the delivery of material from the hopper is more efficient than has previously been the case.

This is achieved with a device having the features of claim 1.

The invention includes a device to effect optimum delivery of dry bulk material from a hopper including means to provide vibratory stimulus to the hopper, the said means including means to identify the resonant frequency of the hopper and its contents at any time and to automatically continuously vary the frequency of the vibratory stimulus to maintain this at or close to the resonant frequency of the hopper and its contents.

It will be understood that the variation of the frequency as set out above will ensure optimal transmitted vibration and the most effective disturbance of the contents of the hopper whatever the state of the contents of the hopper.

It is preferred that when the resonant frequency of the hopper is reached, the amplitude of the vibration may be modified to provide by the device the optimum operating conditions of the device and flow of the hopper's contents.

The device includes an accelerometer which measures the vibration of the device, and this the hopper and the frequency of vibration is originally varied until the accelerometer indicates optimal vibration and subsequently, the frequency is varied about this position to maintain optimal vibration notwithstanding the resonant frequency of vibration of the hopper varying depended on the contents thereof and the location of the contents.

The initial frequency of vibration can be from a lower or upper limit, depending on the general characteristics of the hopper and can then be varied upwardly or downwardly until the resonant frequency Is reached. During operation the frequency can be automatically varied about this optimum frequency by a predetermined frequency range to maintain the device operating at the optimal frequency of excitation.

It is generally preferred that the device of the invention be associated with the cone of the hopper to provide optimal excitation close to where blocking may occur.

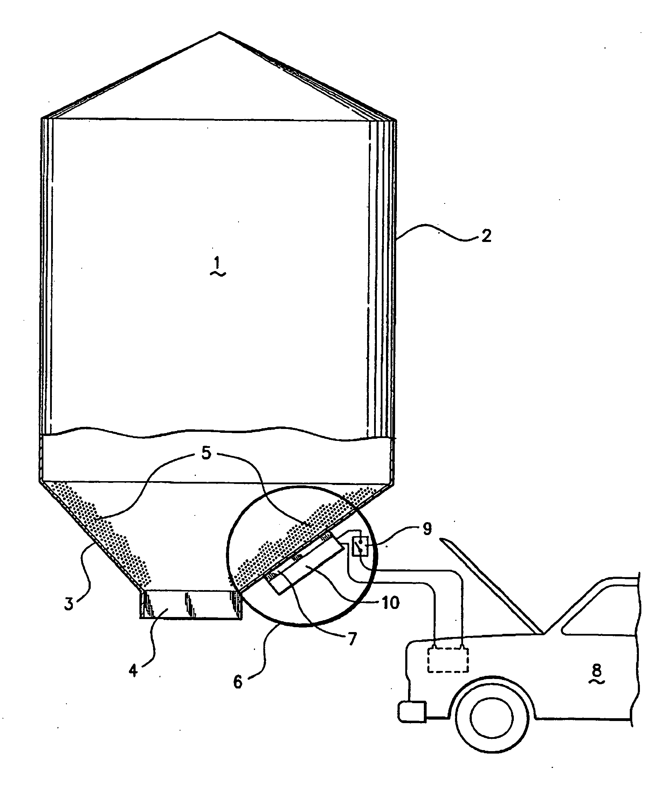

In order that the invention can be more readily understood, one particular application of the invention will be described in relation to the drawing which is that same as included in the specification of an earlier Australian patent application 2004201408 entitled Hopper Emptying Device and which is included herein simply for an indication of a possible physical arrangement of the device.

Referring to the Figure there is a hopper 1 which comprises a substantially cylindrical upper section 2 and a conical lower section 3. The conical lower section 3 is provided with a delivery area 4. Under normal circumstances, the material within the hopper flows to the delivery area to an auger conveyor (not shown) directly beneath the hopper 4. However due to compaction of the material 5 in the lower conical section 3 and/or insufficient slope in the lower section 3 of the hopper, material can be retained within the hopper against the lower walls 3 and not flow.

In order to move or dislodge the material 5 from the hopper walls 3, the device 10 is, in this embodiment, portably mounted to the hopper wall 3. Physically, the vibration unit 6 comprises a mounting plate 7 contacting the hopper walls 3. The mounting plate 7 is preferably held in position by electro-magnets mounted within the plate. The electro-magnets or magnets powered from a portable electric source which may be a 12 or 24 volt DC supply as provided by a battery in a vehicle 8. The power supply passes through a switch 9 which when turned on, allows the electrical power to energise the hopper 1 in the electro-magnets in the plate 7. The use of the electro-magnetic attachment means enables the vibration unit 6 to be easily mounted and dismounted from the conical section of the hopper.

The vibration means 10 which also may be powered from a portable power supply such as a 12 or 24 volt DC supply battery will be described further hereinafter. Although in the drawings the power Is DC power obtained from a vehicle, it will be understood that any other DC or AC power source could be used.

The device of the invention includes a microprocessor-controlled device to promote the discharge of hoppers or hopper like structures used to store dry bulk material.

The device is based on providing a suitable vibratory stimulus to the structure resulting in the disturbance of the product and thus promoting flow of the product. The device meets a practical need to a wide range of industries which rely on the effective handling of dry granular material such as, but not limited to the use in food processing, pharmaceutical manufacturing, chemical manufacturing, grain storage and bulk transport.

The operation of the device is that it exploits the principle that every structure possesses distinct mechanical resonances at specific natural frequencies.

When applied to hoppers, under resonance conditions, the structure has a tendency to vibrate at optimal levels which results in disturbances at the interface with the granular material. This, coupled with the influence of gravity, promotes the downward flow of the material. The main desiderata of the device is to control the frequency and amplitude of the vibration device or devices in such a way that optimal resonance conditions in the hopper or hopper like structures are maintained throughout he period during which the hopper is being emptied.

The device incorporates an accelerometer that is mounted on or adjacent to the vibration actuator. Once activated, the controller generates low-level, low frequency electric signals that actuate a vibrator or vibrators which are connected to the hopper. The resulting induced vibrations of the hopper are continuously monitored via the accelerometer. The vibration frequency is gradually increased and the vibration amplitude automatically adjusted to maintain the optimal level of vibration at the hopper or hopper like structures.

The measured vibration level is used to determine whether resonance or near-resonance conditions are achieved. Once this occurs, the vibration amplitude is increased to a level deemed suitable as the optimum required to induce bulk or dry material flow. During material discharge, the natural frequency of the hopper or hopper like structure is likely to vary. The device of the invention is designed to account for such situations by remaining active and will search for the new resonant frequency thus continually altering the excitation frequency such that true resonance is maintained throughout and thus achieving the optimal discharging process.

Because this controller induces the system to operate at optimal resonant frequencies it is likely that the vibrator being used could be smaller than those presently used to produce the same or similar results. The device is fully automated to account for variations in bulk and or granular material type and levels, hopper design and environmental conditions.

This device is designed to control vibration actuators capable of inducing a wide range of vibration signatures, frequencies and amplitudes into the hopper or hopper like structure.

This device can simultaneously control a number of actuators and sensors placed at various locations on the hopper or hopper like structure.

To restate this somewhat more fully, the controller undertakes the following:
1. It generates a constant amplitude low-level, electric signal that actuate a vibrator or vibrators which are connected to the hopper. The vibration frequency is gradually varied between two predetermined frequencies (sinusoidal sweep) while the resulting induced vibrations of the hopper are simultaneously monitored via the accelerometer.
2. The resulting vibration amplitude is stored in the controller's memory as a function of excitation frequency.
3. The controller detects the frequency corresponding to the maximum vibration response amplitude (resonant frequency) and generates a full-level signal at that frequency. This has been shown to induce bulk or dry material flow.
4. The controller also modulates the frequency of the excitation signal between two predetermined limits proportional to the main (centre) frequency in order to ensure that small shifts in the natural frequency of the structure are taken into account. This is sustained for a predetermined duration (say 1 minute)
5. A new set of frequency limits based on the last resonant frequency are generated and a new sinusoidal sweep (step 1) is undertaken over a predetermined frequency range congruent with the dynamic behaviour of the hopper.
6. Steps 1 - 5 are repeated continually in order to ensure that the optimal level of vibration at the hopper or hopper like structures is maintained.

The control software is fully automated and is designed so that it repeatedly seeks the highest amplitude resonant frequency of the structure and dwell at that frequency with a predetermined frequency modulation regime (optional) for a predetermined period. The resonant frequency is established using the swept-sinysoid method by which a sinusoidal vibration of continually varying frequency is induced into the structure while the structure's vibratory response is measured simultaneously. The most severe resonant frequency corresponds to the maximum response amplitude. The structure is then vibrated at the resonant frequency (which can be frequency-modulated tc ensure that the region of frequencies around the resonant frequency is included.) This is sustained for a predetermined period after which the resonant frequency of the structure is re-measured using a reduced bandwidth sine sweep. This is to ensure that the excitation frequency always corresponds to the structure's actual resonant frequency which may vary as the material is discharged. This is repeated endlessly until the system is de activated.

The software transmits the excitation signal via the controller's audio output channel and receives the accelerometer signal via the controller's input (line in) channel.

Configuration parameters that determine the functionality of the controller are as follows.
- Minimum frequency of sine sweep [Hz]. Corresponds to a fraction of the lowest expected resonant frequency of the structure
- Maximum frequency of sine sweep [Hz]. Corresponds to the highest expected severe resonant frequency of the structure
- Initial sweep-up time [sec]. The time taken to initially sweep through the frequency range.
- Settling time after the sweep [sec]. The time taken to extinguish the sweep signal after the sweep is complete.
- Bandwidth of dwell oscillation [%]. Frequency modulation range as a proportion of the excitation frequency.
- Time of dwell oscillation [sec]. Rate of frequency modulation.
- Dwell duration [sec]. Period of resonant excitation before a new sinysoidal sweep is undertaken to update the structure's resonant frequency
- Number of cycles. Can be set to infinite or to a predetermined number of cycled before the system stops automatically.
- Lower frequency limit for consecutive sweeps [% of resonance frequency]. Low limit of frequency sweep for resonant frequency update.
- Upper frequency limit for consecutive sweeps [% of resonance frequency]. High limit of frequency sweep for resonant frequency update.
- Consecutive sweep-up time [sec]. The time taken to sweep through the frequency range.
- Points of resonance search. Number of discrete frequency values over the frequency range.
- Attenuation factor for the sinusoidal sweep. Corresponds to the amplitude of the swept sinusoidal vibrations.
- Attenuation factor for the dwell. Corresponds to the amplitude of the resonant excitation vibrations.

The system is configured in such a way that the controller software will start automatically on completion of the operating system boot sequence. The software is loaded onto the controller's RAM which also hosts the system's operating system.boot.

Because this controller induces the system to operate at optimal resonant frequencies it the vibrator being used could be smaller than those presently used to produce the same or similar results.

It will be appreciated that the device is fully automated to account for variations in bulk and or granular material type and levels, hopper and hopper like structure design and environmental conditions.

Further the system is portable, being able to be moved from hopper to hopper and as it searches for the resonant frequency and then maintain a check to see that the frequency being used is optimum, there is no wasted set-up time or calibration necessary when shifting from one hopper to an other.

Whilst there has been described herein one particular form of device of the invention and certain possible variations of this, it will be understood that these are exemplary only and variations can be made in the physical form, the method of connection to the hopper and to the operation of the measurement of the vibration without departing from the scope of the invention as defined in the appended claims.

For example, the method of ascertaining the resonant frequency does not have to be done using sinusoidal sweeps but other methods and their associated algorithms can be used. Also reference to the operating system used and other specifics can be varied as well known in the art.

## Claims

1. A device to effect optimum delivery of dry bulk material from a hopper, said device comprising:
excitation means arranged to apply vibratory stimulus to said hopper;
measuring means arranged to measure the vibration of said hopper in response to said applied vibratory stimulus; and
control means arranged to control the excitation means to maintain said vibratory stimulus at or close to a resonant frequency of said hopper and its contents;
**characterised in that** the control means is arranged to control the excitation means to perform a first sweep, whereby the excitation means varies the frequency of the vibratory stimulus applied to said hopper, and to determine a frequency of said varying frequency applied vibratory stimulus that provides maximum vibration response of the hopper as measured by said measuring means, the control means then being arranged to control the excitation means to deliver said determined frequency of vibratory stimulus to provide said maximum vibration response of the hopper for a predetermined time interval, the control means then being arranged, such that after said predetermined time interval, the excitation means is controlled to perform at least another sweep to determine the frequency of said varying frequency applied vibratory stimulus that provides maximum vibration response of the hopper as measured by the measuring means, the excitation means being controlled to deliver said determined frequency of vibratory stimulus to provide said maximum vibration response of the hopper for a further predetermined time interval, until said dry bulk material is delivered from the hopper.

2. A device as claimed in claim 1, **characterised in that** the measuring means is an accelerometer arranged to measure the vibration of said hopper in response to said vibratory stimulus, wherein the control means is configured such that during the first and further sweeps, the frequency of vibratory stimulus applied by the excitation means is varied until said accelerometer indicates optimum vibration response of the hopper.

3. A device according to claim 2, **characterised in that** the control means is arranged to vary the frequency of vibratory stimulus applied by the excitation means during the first and further sweeps by increasing the frequency of applied vibratory stimulus from a low frequency until said accelerometer indicates that a maximum vibration response of the hopper has been reached.

4. A device as claimed in claim 3, **characterised in that** the control means is arranged to vary the frequency of vibratory stimulus applied by the excitation means during the first and further sweeps between two predetermined frequencies, said accelerometer being arranged to monitor the resulting vibration response of the hopper during said sweep and to determine the maximum vibration response of the hopper, the control means being arranged to store the amplitude of the maximum vibration response in a memory as a function of the frequency of vibratory stimulus applied by the excitation means.

5. A device as claimed in claim 1, **characterised in that** the control means is arranged such that during the search routine it varies the frequency of vibratory stimulus through a sinusoidal sweep to determine the frequency of vibration response that provides maximum vibration response of the hopper.

6. A device as claimed in any one of the preceding claims, **characterised in that** the device comprises a plurality of excitation means mountable to the hopper.

7. A device as claimed in any one of the preceding claims, **characterised in that** said device is portable, and is adapted to be moved from one hopper to another hopper.

8. A device as claimed in any one of the preceding claims and a hopper, **characterised in that** the device is located on or adjacent a cone portion of said hopper to provide optimal excitation of the dry bulk material in a region of the hopper where dry bulk material is prone to blockage.

## Patentansprüche

1. Vorrichtung zum Bewirken einer optimalen Abgabe von trockenem Schüttgut aus einem Behälter, wobei die Vorrichtung Folgendes umfasst:
Erregungsmittel, das so angeordnet ist, dass es den Behälter durch Vibration stimuliert;
Messmittel, das so angeordnet ist, dass es die Vibration des Behälters als Reaktion auf die angewandte Vibrationsstimulation misst; und
Steuermittel, das so angeordnet ist, dass es das Erregungsmittel steuert, um die Vibrationsstimulation bei oder nahe einer Resonanzfrequenz des Behälters und seines Inhalts zu halten;
**dadurch gekennzeichnet, dass** das Steuermittel so angeordnet ist, dass es das Erregungsmittel steuert, einen ersten Durchlauf durchzuführen, wobei das Erregungsmittel die Frequenz der auf den Behälter angewandten Vibrationsstimulation variiert, und dass es eine Frequenz der variierenden Frequenz der angewandten Vibrationsstimulation bestimmt, die eine maximale Vibrationsreaktion des Behälters wie vom Messmittel gemessen bietet, wobei das Steuermittel dann so angeordnet ist, dass es das Erregungsmittel steuert, dass es die bestimmte Frequenz an Vibrationsstimulation liefert, um für ein zuvor festgelegtes Zeitintervall die maximale Vibrationsreaktion des Behälters zu bieten, wobei das Steuermittel dann so angeordnet ist, dass das Erregungsmittel nach dem zuvor festgelegten Zeitintervall gesteuert wird, um mindestens einen weiteren Durchlauf durchzuführen, um die Frequenz der variierenden Frequenz der angewandten Vibrationsstimulation bestimmen, die eine maximale Vibrationsreaktion des Behälters wie vom Messmittel gemessen bietet, wobei das Erregungsmittel so gesteuert wird, dass es die zuvor festgelegte Frequenz der Vibrationsstimulation liefert, um die maximale Vibrationsreaktion des Behälters für ein weiteres zuvor festgelegtes Zeitintervall zu bieten, bis das trockene Schüttgut aus dem Behälter abgegeben ist.

2. Vorrichtung wie in Anspruch 1 beansprucht, **dadurch gekennzeichnet, dass** das Messmittel ein Akzelerometer ist, das so angeordnet ist, dass es die Vibration des Behälters als Reaktion auf die Vibrationsstimulation misst, wobei das Steuermittel so konfiguriert ist, dass während des ersten Durchlaufs und weiterer Durchläufe die Frequenz der vom Erregungsmittel angewandten Vibrationsstimulation variiert, bis das Akzelerometer die optimale Vibrationsreaktion des Behälters anzeigt.

3. Vorrichtung nach Anspruch 2, **dadurch gekennzeichnet, dass** das Steuermittel so angeordnet ist, dass es die Frequenz der vom Erregungsmittel angewandten Vibrationsstimulation während des ersten Durchlaufs und weiterer Durchläufe variiert, indem die Frequenz der angewandten Vibrationsstimulation von einer niedrigen Frequenz erhöht wird, bis das Akzelerometer anzeigt, dass eine maximale Vibrationsreaktion des Behälters erreicht ist.

4. Vorrichtung wie in Anspruch 3 beansprucht, **dadurch gekennzeichnet, dass** das Steuermittel so angeordnet ist, dass es die Frequenz der vom Erregungsmittel angewandten Vibrationsstimulation während des ersten Durchlaufs und weiterer Durchläufe zwischen zwei zuvor festgelegten Frequenzen variiert, wobei das Akzelerometer so angeordnet ist, dass es die resultierende Vibrationsreaktion des Behälters während des Durchlaufs verfolgt und die maximale Vibrationsreaktion des Behälters bestimmt, wobei das Steuermittel so angeordnet ist, dass es die Größe der maximalen Vibrationsreaktion als Funktion der Frequenz der vom Erregungsmittel angewandten Vibrationsstimulation in einem Speicher speichert.

5. Vorrichtung wie in Anspruch 1 beansprucht, **dadurch gekennzeichnet, dass** das Steuermittel so angeordnet ist, dass es während der Suchroutine die Frequenz der Vibrationsstimulation durch einen Sinusdurchlauf variiert, um die Frequenz der Vibrationsreaktion, die eine maximale Vibrationsreaktion des Behälters bietet, zu bestimmen.

6. Vorrichtung wie in einem der vorstehenden Ansprüche beansprucht, **dadurch gekennzeichnet, dass** die Vorrichtung eine Vielzahl von Erregungsmitteln, die am Behälter angebracht werden können, umfasst.

7. Vorrichtung wie in einem der vorstehenden Ansprüche beansprucht, **dadurch gekennzeichnet, dass** die Vorrichtung tragbar ist, und so angepasst ist, dass sie von einem Behälter zu einem anderen Behälter getragen werden kann.

8. Vorrichtung wie in einem der vorstehenden Ansprüche beansprucht und Behälter, **dadurch gekennzeichnet, dass** sich die Vorrichtung auf oder neben einem Kegelteil des Behälters befindet, um eine optimale Erregung des trockenen Schüttguts in einem Bereich des Behälters, in dem trockenes Schüttgut für Blockierung anfällig ist, zu bieten.

## Revendications

1. Dispositif destiné à assurer une distribution optimale de matières sèches en vrac à partir d'une trémie, ledit dispositif comprenant :
un moyen d'excitation agencé pour appliquer un stimulus vibratoire à ladite trémie ;
un moyen de mesure agencé pour mesurer les vibrations de ladite trémie en réponse audit stimulus vibratoire appliqué ; et
un moyen de commande agencé pour commander ledit moyen d'excitation afin de maintenir ledit stimulus vibratoire à une fréquence de résonance de ladite trémie et de son contenu, ou proche de celle-ci ;
**caractérisé en ce que** le moyen de commande est agencé pour inciter le moyen d'excitation à exécuter un premier balayage, le moyen d'excitation faisant varier la fréquence du stimulus vibratoire appliqué à ladite trémie, et pour déterminer une fréquence dudit stimulus vibratoire appliqué selon une fréquence variable qui fournit la réponse de vibration maximale de la trémie, telle que mesurée par ledit moyen de mesure, le moyen de commande étant alors agencé pour inciter le moyen d'excitation à délivrer ladite fréquence déterminée du stimulus vibratoire afin de fournir ladite fréquence ladite réponse de vibration maximale de la trémie pour un intervalle de temps prédéterminé, le moyen de commande étant également agencé de manière à ce qu'après ledit intervalle de temps prédéterminé, le moyen d'excitation soit incité à exécuter au moins un autre balayage afin de déterminer la fréquence dudit stimulus vibratoire appliqué à une fréquence variable qui fournit la réponse de vibration maximale de la trémie, telle que mesurée par le moyen de mesure, le moyen d'excitation étant incité à délivrer ladite fréquence déterminée du stimulus vibratoire pour fournir ladite réponse de vibration maximale de la trémie pour un nouvel intervalle de temps prédéterminé, jusqu'à ce que lesdites matières sèches en vrac soient distribuées à partir de ladite trémie.

2. Dispositif selon la revendication 1, **caractérisé en ce que** le moyen de mesure est un accéléromètre agencé pour mesurer les vibrations de ladite trémie en réponse audit stimulus vibratoire, le moyen de commande étant configuré de manière à ce que pendant le premier balayage et les suivants, la fréquence du stimulus vibratoire appliqué par le moyen d'excitation varie jusqu'à ce que ledit accéléromètre indique une réponse de vibration optimale de la trémie.

3. Dispositif selon la revendication 2, **caractérisé en ce que** le moyen de commande est agencé pour faire varier la fréquence du stimulus vibratoire appliqué par le moyen d'excitation pendant le premier balayage et les suivants en augmentant la fréquence du stimulus vibratoire appliqué à partir d'une fréquence basse, jusqu'à ce que ledit accéléromètre indique qu'une réponse de vibration maximale de la trémie a été atteinte.

4. Dispositif selon la revendication 3, **caractérisé en ce que** le moyen de commande est agencé pour faire varier la fréquence du stimulus vibratoire appliqué par le moyen d'excitation pendant le premier balayage et les suivants entre deux fréquences prédéterminées, ledit accéléromètre étant agencé pour surveiller la réponse de vibration résultante de la trémie pendant ledit balayage, et pour déterminer la réponse de vibration maximale de la trémie, le moyen de commande étant agencé pour stocker l'amplitude de la réponse de vibration maximale dans une mémoire, comme fonction de la fréquence du stimulus vibratoire appliqué par le moyen d'excitation.

5. Dispositif selon la revendication 1, **caractérisé en ce que** le moyen de commande est agencé de manière à faire varier la fréquence du stimulus vibratoire pendant la routine de recherche, par un balayage sinusoïdal pour déterminer la fréquence de la réponse de vibration fournissant une réponse de vibration maximale à la trémie.

6. Dispositif selon l'une quelconque des revendications précédentes, **caractérisé en ce que** le dispositif comprend une pluralité de moyens d'excitation aptes à être montés sur la trémie.

7. Dispositif selon l'une quelconque des revendications précédentes, **caractérisé en ce que** ledit dispositif est portable et adapté pour être déplacé d'une trémie à une autre trémie.

8. Dispositif selon l'une quelconque des revendications précédentes et trémie, **caractérisé en ce que** le dispositif est disposé sur une partie de cône de ladite trémie ou à côté de celle-ci, pour fournir une excitation optimale des matières sèches en vrac dans une région de la trémie aux endroits où les matières sèches en vrac sont sujettes au blocage.
